# FASCICULE DE BREVET EUROPEEN

(11) **EP 0 670 070 B1**
(45) Date de publication et mention de la délivrance du brevet: **15.01.1997**
(21) Numéro de dépôt: 94900197.8
(22) Date de dépôt: 17.11.1993
(51) Int. Cl.: G06K 11/14, G06K 11/18

(54) **PROCEDE ET DISPOSITIF D'ACQUISITION ET DE TRAITEMENT D'INFORMATIONS GRAPHIQUES**
VERFAHREN UND VORRICHTUNG ZUR ERFASSUNG UND BEHANDLUNG GRAFISCHER INFORMATION
GRAPHIC DATA ACQUISITION AND PROCESSING METHOD AND DEVICE

(30) Priorité: 17.11.1992 FR 9213786; 17.11.1992 FR 9213787
(43) Date de publication de la demande: 06.09.1995
(73) Titulaire: LECTRA SYSTEMES, F-33610 Cestas Bourg (FR)
(72) Inventeur: DEBUISSER, Thomas, F-33600 Pessac (FR); LERISSON, Jean-Pierre, F-33600 Pessac (FR); GILLIARD, Laurent, F-33000 Bordeaux (FR)
(74) Mandataire: Joly, Jean-Jacques
(86) Numéro de dépôt international: FR9301123
(87) Numéro de publication internationale: WO9411844

(56) Documents cités:
- EP-A- 0 307 667
- EP-A- 0 307 893
- EP-A- 0 497 598
- FR-A- 2 423 000
- GB-A- 2 042 726
- GB-A- 2 062 228
- US-A- 4 654 648
- US-A- 4 814 552
- US-A- 5 126 513
- IBM TECHNICAL DISCLOSURE BULLETIN vol. 24, no. 4 , Septembre 1981 , NEW YORK US pages 2013 - 2016 APPEL A. ET AL 'DIGITISING TABLETS FOR AREA AND COLOR'

## Description

La présente invention concerne l'acquisition et le traitement d'informations graphiques représentatives d'un tracé effectué sur un support au moyen d'une pointe d'un instrument.

Un domaine particulier d'application de l'invention est celui des arts graphiques appliqués, afin d'offrir la possibilité de numériser un tracé effectué manuellement par un créateur, en vue de l'affichage instantané de ce dessin et/ou de sa mémorisation pour une exploitation ultérieure par des moyens informatiques.

Différents procédés sont connus pour numériser un tracé par repérage des positions successives de l'instrument utilisé pour effectuer ce tracé.

Certains de ces procédés utilisent des supports particuliers, ou tablettes de numérisation, qui permettent un repérage de la position d'une pointe de l'instrument par propagation d'un courant électrique ou de vibrations à partir de la pointe à travers le matériau de support jusqu'à des détecteurs disposés en périphérie du support, ou par couplage électromagnétique entre l'instrument et un réseau de conducteurs associé à la tablette. De tels supports particuliers sont généralement coûteux et n'offrent souvent qu'une surface utile de petites dimensions. De plus, ces procédés souffrent souvent d'une faible précision et d'une faible définition dans la reproduction du tracé. Cela se remarque d'autant plus lorsque le tracé est effectué manuellement avec une vitesse de tracé élevée, ce qui est le cas des créateurs en art graphique.

Pour éviter l'utilisation de supports particuliers et offrir de plus grandes surfaces utiles, il a été proposé de repérer la position de l'instrument par mesure du temps de propagation d'une onde ultrasonore entre un émetteur porté par l'instrument et plusieurs récepteurs occupant des positions déterminées par rapport au support. Des procédés de ce type, autorisant un repérage de position dans un plan ou dans l'espace, en utilisant au moins deux ou trois récepteurs, sont décrits dans les documents FR-A-2 054 633 et FR-A-2 551 542.

Le document FR-A-2 423 000 décrit un dispositif dans lequel l'instrument porte deux émetteurs ultrasonores alignés avec la pointe de l'instrument afin de déterminer précisément les coordonnées de cette pointe sur une surface plane à partir du repérage des positions des deux émetteurs.

Il est nécessaire de synchroniser l'émission d'une onde ultrasonore par l'émetteur porté par l'instrument et le début de la mesure du temps de propagation par un circuit de mesure relié aux récepteurs. La synchronisation peut être effectuée par une liaison filaire avec l'instrument ou, comme décrit notamment dans le document EP 0 312 481, par transmission d'une onde infrarouge. Dans ce dernier cas, le procédé offre l'avantage supplémentaire de permettre une exécution du tracé au moyen d'un instrument sans fil, celui-ci étant alors pourvu d'une source d'énergie autonome.

Ces procédés utilisant la transmission d'ondes ultrasonores conviennent pour l'application particulière envisagée, à savoir la numérisation de dessins effectués à main levée. De plus, en commandant l'émission des ondes ultrasonores sous forme impulsionnelle, c'est-à-dire en commandant l'émission d'impulsions ultrasonores, de plus grandes précision et définition dans la numérisation du tracé peuvent être atteintes par un choix d'une fréquence suffisamment élevée des impulsions.

Toutefois, ces procédés présentent une limitation en ce qu'ils offrent uniquement la possibilité de numériser un tracé sous forme de lignes de points. Or, dans certains domaines des arts graphiques appliqués, les créateurs, en particulier les stylistes, sont habitués au travail au feutre ou autres outils d'écriture, par exemple le pinceau, permettant d'effectuer des tracés avec une largeur de trait variable, dans les couleurs de leur choix.

Un dispositif permettant de simuler un tel travail, avec affichage par rétroprojection du tracé effectué, est décrit dans son principe par le document FR-A-2 676 568 publié après la date de priorité revendiquée pour la présente demande. FR-A-2 676 568 correspond au WO-A-9 221 103 publié le 26.11.92. WO-A-9 221 103 tombe sous les conditions de l'article 54(3) CBE et comprend deux détecteurs microphoniques linéaires capables de mesurer les ondes ultrasonores émises par les deux émetteurs portés par l'instrument.

L'invention a pour but de fournir un procédé qui permette de façon rapide et précise l'acquisition d'informations graphiques comprenant une information de position d'un instrument et une information de largeur de trait de façon réelle ou simulée au moyen d'un instrument.

En particulier, l'invention a pour but de permettre une reproduction réaliste d'un travail avec des feutres ou autres outils d'écriture avec lesquels la largeur de trait varie selon la façon dont l'outil est tenu ou appliqué sur le support.

L'invention a aussi pour but de permettre une acquisition des informations graphiques de façon précise, même dans le cas de tracés effectués rapidement à main levée, et d'autoriser l'utilisation d'instruments sans fil et de supports neutres offrant des surfaces utiles dont les dimensions peuvent être relativement grandes.

Ces buts sont atteints, conformément à l'invention, grâce un procédé d'acquisition et de traitement de données graphiques représentatives d'un tracé effectué sur une surface d'un support neutre au moyen d'une pointe d'un instrument, procédé comprenant :
- l'émission d'impulsions ultrasonores au moyen d'au moins deux émetteurs d'ondes ultrasonores portés par l'instrument espacés l'un de l'autre dans une direction longitudinale de celui-ci, et sensiblement alignés avec la pointe de l'instrument,
- la réception des impulsions ultrasonores par plusieurs récepteurs d'ondes ultrasonores occupant des positions déterminées par rapport au support de sorte que des impulsions ultrasonores émises par les émétteurs de l'instrument situé à un point quelconque de la surface soient reçues par plus de deux récepteurs,
- la mesure des temps de propagation des impulsions ultrasonores entre chacun des émetteurs et les récepteurs,
- l'évaluation, à partir des temps de propagation mesurés, des coordonnées d'au moins un vecteur défini par les positions des deux émetteurs portés par l'instrument,
- la détermination, à partir de l'évaluation des coordonnées dudit vecteur, de la position de la pointe de l'instrument sur le support et d'au moins l'une des deux informations d'orientation de l'instrument constituées par l'inclinaison de la direction longitudinale de l'instrument par rapport au support et la position angulaire de l'instrument autour d'un axe faisant un angle prédéterminé par rapport au support,
- la détection de la pression exercée sur le support par la pointe de l'instrument,
- la transmission d'une information représentative de la pression détectée, et
- la détermination, en fonction d'au moins l'une des informations d'orientation et de pression, d'une information de largeur de trait, afin d'associer à une information représentant la position de la pointe de l'instrument, une information représentant la largeur de trait pour cette position.

Pour l'évaluation des coordonnées du vecteur défini par les positions des deux émetteurs, on utilise un nombre redondant de mesures de temps de propagation, de sorte qu'une mesure erronée ou aberrante peut être détectée et éliminée.

Les informations d'orientation de l'instrument sont déterminées à partir de la mesure de l'amplitude et de la direction de la projection sur le support du vecteur défini par les positions des deux émetteurs.

La sélection des paramètres utiles pour la détermination de l'information de largeur de trait est effectuée en fonction du type d'outil d'écriture dont l'utilisation est simulée au moyen de l'instrument. Certains outils d'écriture, par exemple des feutres à pointe aplatie, produisent des traits dont la largeur varie en fonction de la position dans laquelle ils sont tenus. D'autres outils, par exemple des feutres à pointe ogive, des pastels, des pinceaux, produisent des traits dont la largeur varie en fonction de la pression exercée sur la pointe. Enfin, certains outils, par exemple des pinceaux, produisent des traits dont la largeur peut varier en fonction de la position dans laquelle ils sont tenus et de la pression exercée.

Avantageusement, le procédé comprend une étape de sélection d'un type d'outil d'écriture simulé par l'instrument et la détermination de la largeur de trait est effectuée à partir d'informations préenregistrées donnant, pour différents outils d'écriture, une relation entre la largeur de trait et au moins l'une desdites informations d'inclinaison de l'outil d'écriture, de position angulaire de l'outil d'écriture, et de pression exercée sur la pointe de l'outil d'écriture.

De façon connue en soi, l'émission des impulsions ultrasonores par un émetteur et le démarrage de la mesure du temps de propagation de cette impulsion jusqu'aux récepteurs sont synchronisés par transmission d'une impulsion infrarouge, cela pour pouvoir disposer d'un instrument sans fil. Les impulsions infrarouges peuvent être transmises entre un émetteur porté par l'instrument et un récepteur solidaire du support, ou inversement. L'information représentative de la pression exercée sur la pointe de l'instrument est transmise par modulation des trains d'impulsions infrarouges de synchronisation

Les ondes ultrasonores émises par les émetteurs portés par l'instrument sont sous forme de trains d'impulsions, par exemple des trains d'impulsions de même fréquence décalés dans le temps. Cette fréquence, qui détermine la fréquence d'échantillonnage du tracé est choisie suffisamment élevée, de préférence au moins égale à 50 Hz. La prise de coordonnées d'au moins 50 vecteurs par seconde permet de conserver une grande précision dans l'acquisition d'un tracé, même lorsqu'il est effectué avec une vitesse de main élevée.

Avantageusement, dans le cas de la simulation de certains outils d'écriture, le procédé comprend la sélection d'une couleur de trait et la détermination d'une information de densité de couleur en fonction de l'information représentant la pression exercée sur la pointe de l'instrument, afin d'associer en outre à l'information représentant la position de la pointe de l'instrument, une information représentant la couleur du tracé pour cette position.

Des couleurs différentes peuvent être sélectionnées pour différentes parties du tracé. L'information de couleur de tracé associée à l'information de position de la pointe de l'instrument consiste alors :
- soit dans la couleur de trait sélectionnée pour la partie du tracé sur laquelle se trouve la position de la pointe de l'instrument,
- soit dans une saturation de couleur sélectionnée lorsque la position de la pointe de l'instrument est à l'intersection de plusieurs parties de tracé pour lesquelles une même couleur a été sélectionnée,
- soit dans un mélange de couleurs sélectionnées lorsque la position de la pointe de l'instrument est à l'intersection de plusieurs parties de tracé pour lesquelles des couleurs différentes ont été sélectionnées.

L'affichage en temps réel d'une image reproduisant les informations de position, de largeur de trait et de couleur de tracé permet à un utilisateur de visualiser de façon réaliste le tracé qu'il effectue sur le support, tel qu'il aurait été obtenu par exemple avec un feutre ou un pinceau. Cet affichage est effectué de préférence par rétroprojection sur le support, de sorte que l'image apparaît directement sous la pointe de l'instrument au fur et à mesure du tracé.

Avantageusement encore, le procédé comprend l'affichage d'un menu dans une zone de la surface du support et la sélection d'une option du menu affiché en réponse à la détection de la position de la pointe de l'instrument en un emplacement correspondant à ladite option. Le menu affiché permet de sélectionner notamment un type d'outil d'écriture dont l'utilisation est simulée, le calibre de cet outil et la couleur de tracé.

Par conséquent, et avec un instrument sans fil, le procédé est remarquable par sa souplesse et la facilité de mise en oeuvre. Il autorise une très grande liberté de mouvement tout en conservant une grande précision dans l'acquisition du tracé avec sa couleur, ses pleins et ses déliés, et en permettant un affichage de ce tracé en temps réel. En outre, le procédé est utilisable avec un support neutre, c'est-à-dire qu'il ne nécessite aucun support devant présenter des caractéristiques particulières pour l'acquisition d'informations de position de l'instrument relativement à ce support.

L'invention a aussi pour but de fournir un dispositif permettant la mise en oeuvre du procédé défini plus haut.

Ce but est atteint par un dispositif d'acquisition et de traitement de données graphiques représentatives d'un tracé effectué sur une surface d'un support au moyen d'une pointe d'un instrument dispositif comportant :
- au moins deux émetteurs d'ondes ultrasonores portés par l'instrument et espacés l'un de l'autre dans une direction longitudinale de l'instrument et sensiblement alignés avec la pointe de l'instrument,
- un circuit générateur d'impulsions de tension relié aux émetteurs pour engendrer l'émission de trains d'impulsions ultrasonores,
- plusieurs récepteurs d'ondes ultrasonores occupant des positions déterminées par rapport au support de sorte que des impulsions ultrasonores émises par les émetteurs de l'instrument situé à un point quelconque de la surface soient reçues par par plus deux récepteurs,
- des moyens pour détecter la pression exercée sur la pointe de l'instrument,
- des moyens de transmission d'une information de pression représentative de la pression détectée, et
- un circuit de traitement relié aux récepteurs d'ondes ultrasonores et recevant l'information de pression, le circuit de traitement comprenant des moyens pour :
   . la mesure des temps de propagation des impulsions ultrasonores entre chacun des émetteurs et les récepteurs,
   . l'évaluation, à partir des temps de propagation mesurés, des coordonnées d'au moins un vecteur défini par les positions des deux émetteurs portés par l'instrument,
   . la détermination, à partir de l'évaluation des coordonnées dudit vecteur, de la position de la pointe de l'instrument sur le support et d'au moins l'une des deux informations d'orientation de l'instrument constituées par l'inclinaison de la direction longitudinale de l'instrument par rapport au support et la position angulaire de l'instrument autour d'un axe faisant un angle prédéterminé par rapport au support, et
   . la détermination, en fonction d'au moins l'une des informations d'orientation et de pression, d'une information de largeur de trait, afin d'associer à une information représentant la position de la pointe de l'instrument, une information représentant la largeur de trait pour cette position.

L'invention sera mieux comprise à la lecture de la description donnée ci-après, à titre indicatif, mais non limitatif, en référence aux dessins annexés sur lesquels :
- la figure 1 est une vue générale très schématique d'un mode de réalisation d'un dispositif conforme à l'invention ;
- la figure 2 est une vue plus détaillée de l'instrument émetteur faisant partie du dispositif de la figure 1 ;
- la figure 3 est un diagramme des circuits de l'émetteur de la figure 2 ;
- la figure 4 illustre la couverture de la surface utile d'acquisition d'informations de position par les récepteurs d'ondes ultrasonores du dispositif de la figure 1 ;
- la figure 5 illustre une variante de disposition des récepteurs d'ondes ultrasonores pour couvrir une surface utile semblable à celle de la figure 2,
- la figure 6 est un diagramme des circuits de réception et de traitement faisant partie du dispositif de la figure 1 ;
- les figures 7 et 8 montrent des formes d'ondes relatives à l'émission et à la réception des impulsions ultrasonores respectivement pour deux niveaux de pression exercée sur la pointe de l'instrument ;
- les figures 9 et 10 ont des schémas illustrant le mode de calcul de la position de la pointe de l'instrument et de l'orientation de ce dernier ;
- les figures 11 et 12 sont des organigrammes illustrant des fonctions réalisées par des processeurs du circuit de traitement faisant partie du dispositif de la figure 1 ; et
- la figure 13 est une représentation schématique de l'affichage d'un tracé avec le dispositif selon l'invention.

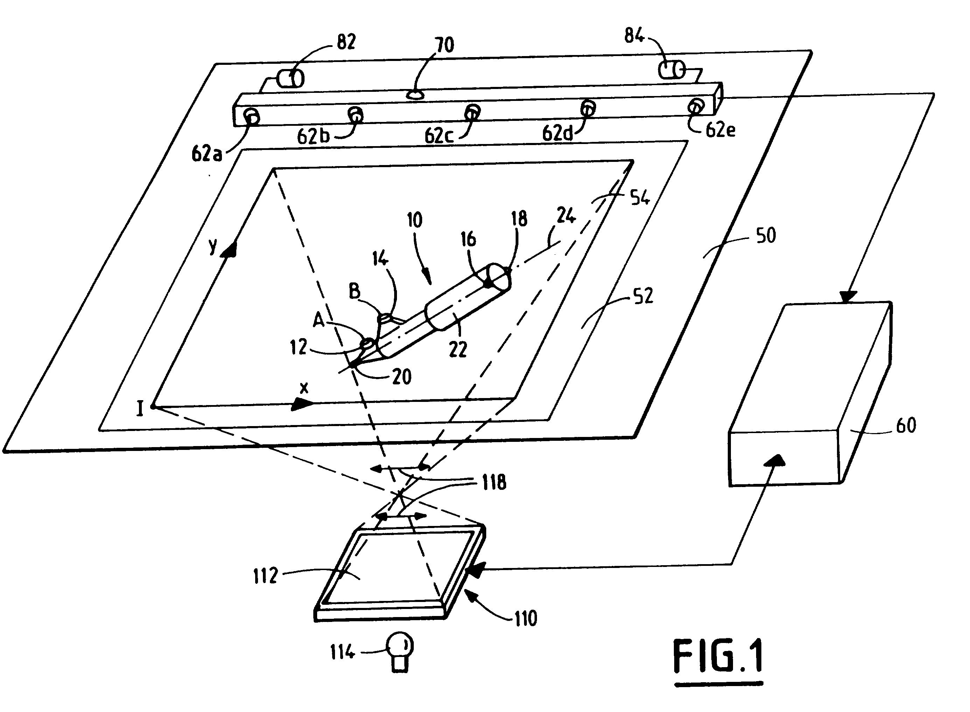

Le dispositif illustré schématiquement par la figure 1 est destiné à permettre l'acquisition, l'affichage et la mémorisation d'informations graphiques représentatives d'un tracé effectué manuellement au moyen d'un instrument 10 par appui de la pointe 20 de celui-ci sur une surface plane d'un support 50.

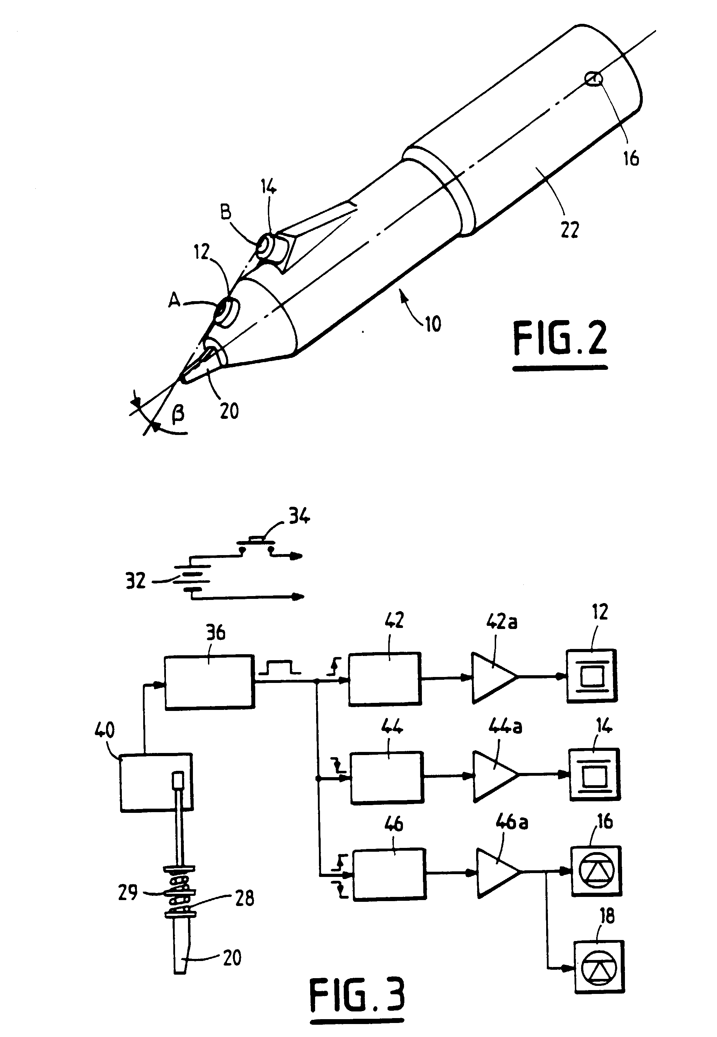

L'instrument 10 (figures 1 et 2) a la forme générale d'un stylo avec un corps 22 sensiblement cylindrique portant deux émetteurs d'ondes ultrasonores 12, 14 et deux émetteurs d'ondes infrarouges 16, 18.

Les émetteurs ultrasonores 12, 14 sont situés au voisinage de l'extrémité de l'instrument portant la pointe 20, d'un même côté du corps 22 et sont espacés l'un de l'autre dans la direction de l'axe longitudinal 24 de l'instrument. L'émetteur 14, qui est le plus éloigné de la pointe 20 est situé à une distance de l'axe 24 supérieure à celle séparant l'émetteur 12 de l'axe 24. Ainsi, la droite passant par les centres a et b des émetteurs 12, 14 n'est pas parallèle à l'axe 24.

Les émetteurs d'ondes infrarouges 16,18 sont situés au voisinage de l'extrémité de l'instrument opposée à celle portant la pointe 20, et sont disposés à l'opposé l'un de l'autre par rapport à l'axe 24. De la sorte, il est quasiment assuré qu'au moins l'un des deux émetteurs 16, 18 n'est pas occulté lorsque l'instrument 10 est tenu dans la main.

La pointe 20 est mobile parallèlement à l'axe 24 et peut être rétractée sous l'effet d'une pression s'exerçant à l'encontre d'un ressort de rappel logé dans le corps 22.

Les ondes ultrasonores émises par les émetteurs 12, 14 sont reçues par des récepteurs d'ondes ultrasonores 62a, 62b, 62c, 62d, 62e fixés sur le support 50.

Les émetteurs et récepteurs d'ondes ultrasonores sont par exemple constitués par des transducteurs piézoélectriques directionnels, c'est-à-dire émettant et recevant à l'intérieur d'un cône centré sur le transducteur. On pourra par exemple utiliser des composants commercialisés par la société japonaise Murata sous la référence MA 40S2S (pour les émetteurs) et MA 40S2R (pour les récepteurs), ou encore sous la référence MA 405AR. Ces composants ont, en émission, une portée pouvant atteindre plusieurs mètres, ce qui offre la possibilité d'avoir des surfaces utiles de grandes dimensions.

Sur le support 50 sont définies une surface utile 52, à l'intérieur de laquelle, les coordonnées de tout point peuvent être déterminées, et une surface de visualisation 54, à l'intérieur de laquelle un tracé peut être effectué et, comme indiqué plus loin, peut être rétroprojeté. Les surfaces 52 et 54 sont deux surfaces rectangulaires aux côtés respectivement parallèles, la surface 54 étant incluse à l'intérieur de la surface 52.

La disposition des récepteurs est choisie pour que tout point de la surface utile 52 soit "visible" par le nombre minimum requis de récepteurs pour déterminer la position de ce point avec redondance.

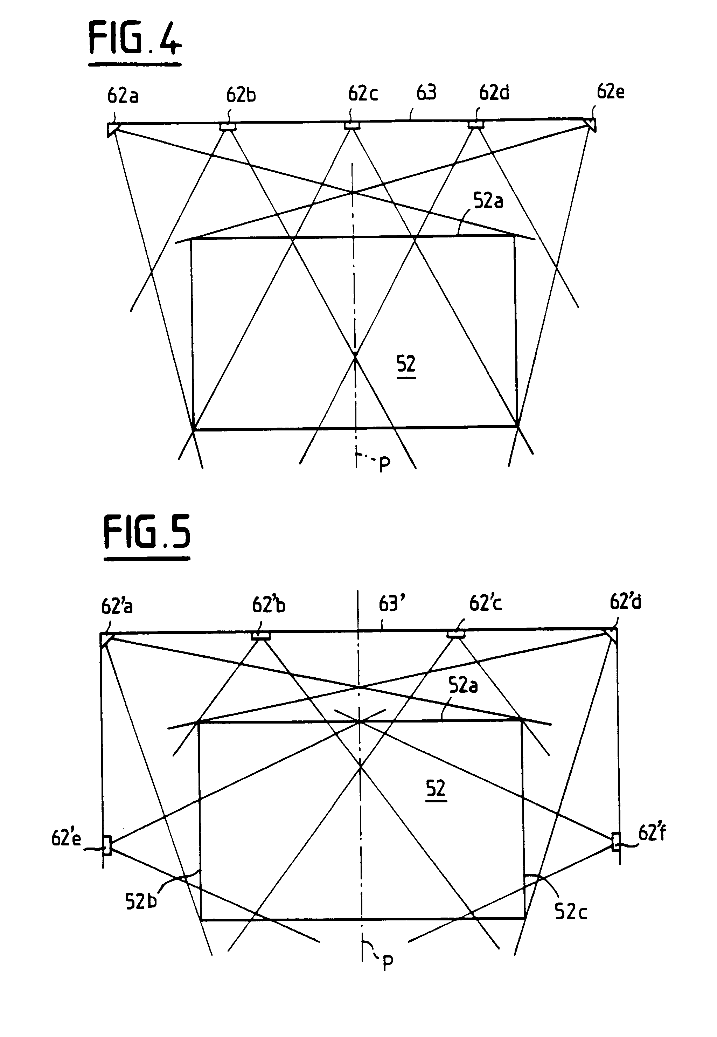

Comme le montre plus particulièrement la figure 4, les récepteurs, au nombre de cinq, sont disposés sur une ligne 63 parallèle à un grand côté 52a de la surface utile 52, à l'extérieur de celle-ci et avantageusement dans un plan parallèle et proche du plan de la surface 52. Les récepteurs 62a et 62e situés aux extrémités de la ligne 63 sont espacés l'un de l'autre d'une distance supérieure à la longueur du côté 52a. Afin d'assurer une couverture optimale de la surface 52, les récepteurs, en particulier ceux 62a et 62e situés aux extrémités, sont orientés de sorte que l'axe de leur cône de réception soit dirigé sensiblement vers le centre de la surface 52.

Bien entendu, le nombre de récepteurs pourra être différent de cinq. On notera toutefois que plus le nombre est petit, plus il est nécessaire d'éloigner les récepteurs de la surface 52 pour couvrir la totalité de celle-ci par les cônes de réception, ce qui peut présenter des inconvénients sur le plan de l'encombrement et en raison de l'affaiblissement plus important des ondes reçues. C'est pourquoi un nombre de récepteurs au moins égal à cinq est préférable.

Afin d'apporter la redondance nécessaire pour pouvoir détecter et éliminer des erreurs ou aberrations dans la détermination de la position de la pointe de l'instrument 10 sur la surface 52, chaque point de celle-ci est situé à l'intérieur d'au moins trois cônes de réception, comme c'est le cas sur la figure 4.

Une variante de disposition des récepteurs est illustrée par la figure 5. Dans ce cas, quatre récepteurs 62'a, 62'b, 62'c, 62'd sont disposés sur une ligne 63' parallèle au côté 52a de la surface 52 tandis que deux récepteurs supplémentaires 62'e, 62'f sont situés de part et d'autre des côtés 52b, 52c de la surface 52 adjacents au côté 52a. Comme précédemment, ces récepteurs peuvent être avantageusement disposés dans un plan parallèle et proche de la surface 52. Un nombre de récepteurs différent de six pourra être choisi, par exemple en disposant plus ou moins de quatre récepteurs le long de la ligne 63'.

On notera que dans les deux dispositions des figures 4 et 5, les récepteurs sont disposés symétriquement par rapport au plan médian P de la surface 52 perpendiculaire au côté 52a. Cela permet de ne pas introduire une dissymétrie de réception selon que l'instrument 10 est tenu par un utilisateur droitier ou gaucher.

Les ondes infrarouges émises par les émetteurs 16, 18 sont reçues par un récepteur d'ondes infrarouges 70 fixé sur le support 50. Les émetteurs d'ondes infrarouges sont constitués par des diodes électroluminescentes et le récepteur par une photodiode.

Un circuit de traitement 60 est relié aux récepteurs et comprend des moyens de mesure et de calcul pour élaborer des informations représentatives, d'une part, de la position de la pointe 20 sur le support 50 et, d'autre part, de la largeur du trait simulée par la façon dont l'instrument 10 est tenu par rapport au support et/ou la pression exercée sur la pointe 20 lors de l'exécution d'un tracé. Ces informations sont transmises à un dispositif d'affichage 110 pour commander en temps réel l'affichage de l'image du tracé sur un écran 112, et sont également stockées dans une mémoire du circuit de traitement. Elles peuvent être complétées par une information représentant la couleur du tracé pour chaque position de la pointe 20, information obtenue à partir d'une sélection de couleur de trait effectuée par l'utilisateur.

L'écran 112 est par exemple constitué par une plaquette à cristaux liquides monochrome ou en couleur. Une source lumineuse 114 éclaire l'écran 112 afin de projeter, au moyen d'une optique 118, l'image du tracé à l'arrière de la surface de visualisation 54. Le support est en un matériau translucide, au moins dans la surface 54. De la sorte, l'image du tracé apparaît en temps réel sur la surface 54, sous la pointe de l'instrument.

Le diagramme des circuits de l'instrument 10 est illustré par la figure 3.

L'énergie électrique nécessaire au fonctionnement des circuits de l'instrument est fournie par une batterie rechargeable 32 via un circuit interrupteur 34. Ce dernier peut comprendre un interrupteur manuel logé sur le corps 22 et/ou un circuit automatique d'extinction en cas de non utilisation de l'instrument au-delà d'une durée prédéterminée.

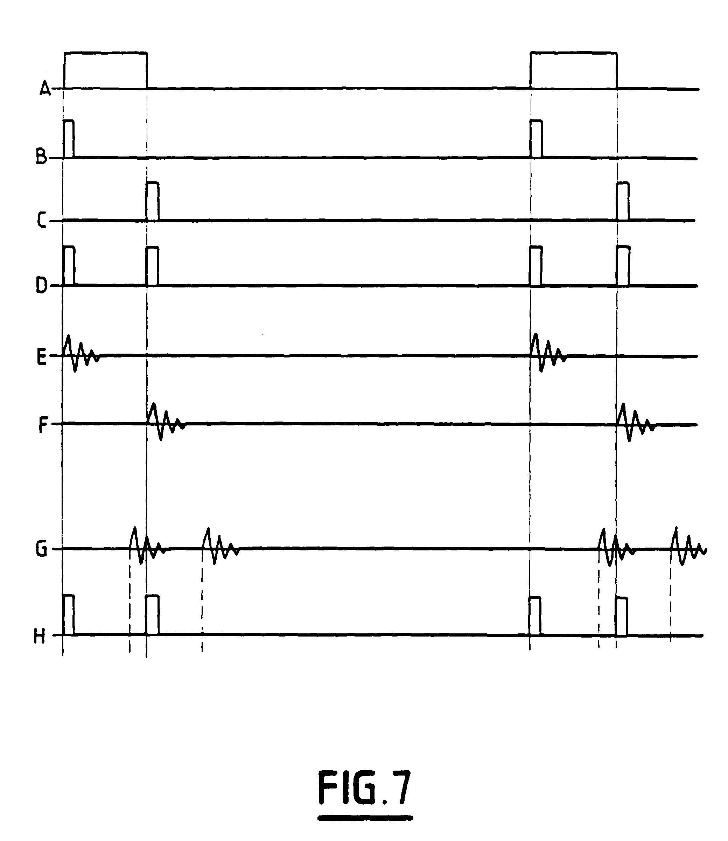

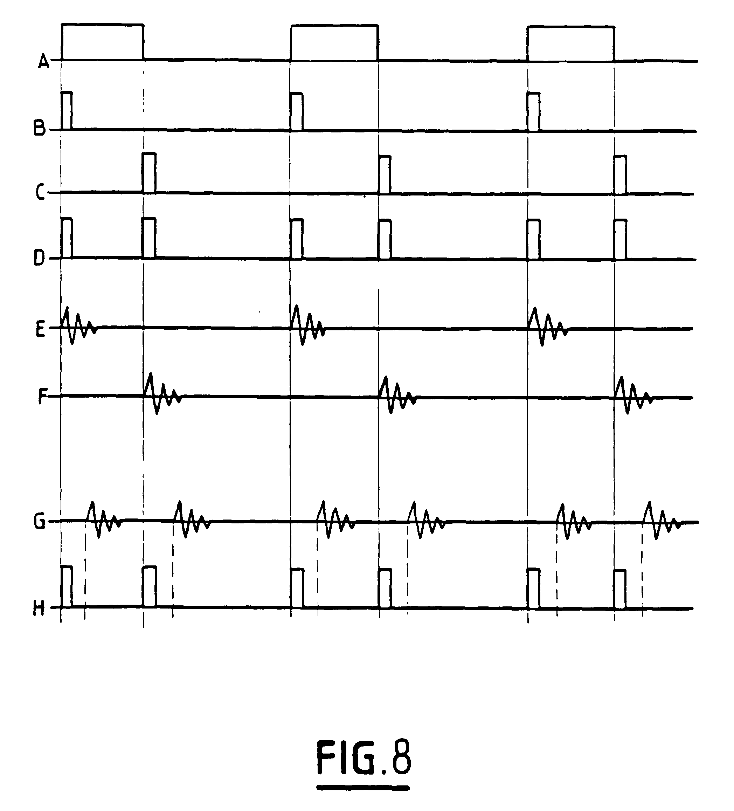

Des impulsions rectangulaires sont fournies par une base de temps 36 comportant un oscillateur à fréquence commandée en tension. Un capteur de déplacement 40, par exemple à effet Hall, est relié à la pointe 20 et fournit une tension représentative de la pression exercée sur la pointe 20, à l'encontre du ressort 28. Le capteur 40 fournit la tension de commande de l'oscillateur de la base de temps 36 de sorte que les impulsions produites par celles-ci ont une fréquence variable en fonction de la pression exercée sur la pointe. La ligne A de la figure 7 montre les impulsions produites par la base de temps lorsque la pointe 20 est levée. Lorsque la pointe 20 est appuyée sur le support 50, la fréquence des impulsions croît en fonction de la pression exercée. La ligne A de la figure 8 montre les impulsions produites par la base de temps pour une pression maximale exercée sur la pointe 20, la rétractation de celle-ci étant limitée par une butée 29.

Les impulsions de la base de temps 36 sont appliquées à des circuits monostables 42, 44, 46. Le circuit 42 est déclenché sur le front montant des impulsions de la base de temps et délivre des impulsions de tension (lignes B des figures 7 et 8) qui, amplifiées par un amplificateur 42a, sont appliquées à l'émetteur ultrasonore 12. Le circuit 44 est déclenchés sur le front descendant des impulsions de la base de temps et délivre des impulsions de tension (lignes C des figures 7 et 8) qui, amplifiées par un amplificateur 44a, sont appliquées à l'émetteur ultrasonore 14. Le circuit 46 est déclenché sur les fronts montants et descendants des impulsions de la base de temps et délivre des impulsions de synchronisation (lignes D des figures 7 et 8) qui, amplifiées par un amplificateur 46a, sont appliquées en parallèle aux émetteurs infrarouges 16, 18.

Les impulsions de tension appliquées aux transducteurs piézo-électriques constituant les émetteurs 12, 14 ont une amplitude d'environ 150 à 200 V et une durée de quelques dizaines de microsecondes. En réponse à ces impulsions, des émetteurs 12, 14 produisent deux trains d'impulsions ultrasonores (lignes E et F des figures 7 et 8), de même fréquence, décalés dans le temps. Chaque impulsion ultrasonore est formée par une onde sinusoïdale amortie dont la fréquence, déterminée par le transducteur, est de plusieurs dizaines de kHz, par exemple environ 40 kHz, hors du domaine audible.

Le rapport cyclique des impulsions de la base de temps est différent de 50 % pour permettre une discrimination entre les impulsions ultrasonores d'un des deux émetteurs 12, 14 et celles de l'autre émetteur. Dans l'exemple illustré, les impulsions de la base de temps 36 ont une largeur constante. Le rapport cyclique croît avec la pression exercée sur la pointe de l'instrument, tout en restant inférieur à 50 %. Il est bien entendu possible de conserver un rapport cyclique constant, seule la fréquence variant. D'autres formes de modulation des trains d'impulsions par l'information de pression sur la pointe de l'instrument sont envisageables, par exemple une variation du rapport cyclique des impulsions de la base de temps, la fréquence étant constante.

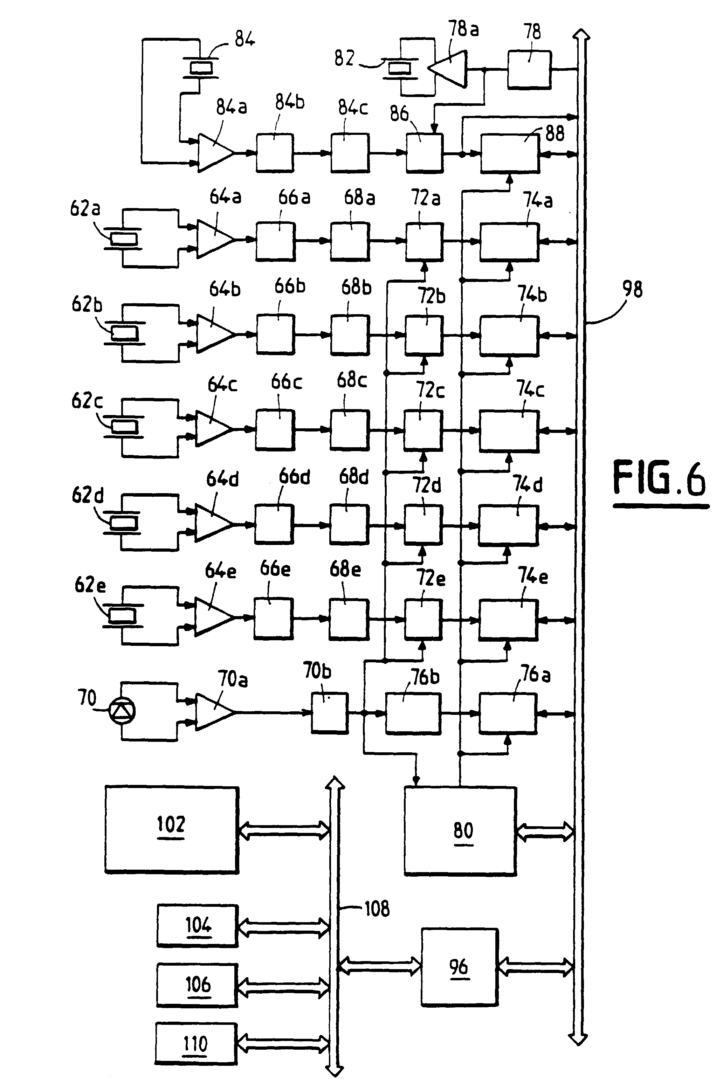

Comme montré par la figure 6, les impulsions ultrasonores recueillies par les récepteurs 62a à 62e (telles que celles montrées à la ligne G des figures 7 et 8, par exemple pour le récepteur 62a) sont amplifiées par des amplificateurs 64a à 64e à asservissement automatique de gain puis appliquées à des circuits de détection de seuil. respectivement 66a à 66e. Chaque circuit de détection de seuil déclenche l'émission d'une impulsion par un circuit monostable correspondant, respectivement 68a à 68e lorsqu'un seuil est dépassé par le signal reçu et amplifié. Les circuits monostables 68a à 68e constituent des circuits de mise en forme des impulsions ultrasonores reçues.

De la même façon, les impulsions infrarouges de synchronisation reçues par le détecteur 70 (lignes H des figures 7 et 8) sont amplifiées par un amplificateur 70a à asservissement automatique de gain et mises en forme par un circuit monostable 70b.

Les fronts montants des impulsions de synchronisation produites par le circuit 70b commandent le déclenchement en parallèle de bascules bistables 72a à 72e dont les réenclenchements sont commandés respectivement par les fronts montants des impulsions produites par le circuit 68a à 68e. Des compteurs 74a à 74c recevant des impulsions d'horloge provenant d'un processeur 80 sont démarrés et arrêtés sur les fronts montants et descendants des impulsions produites par les bascules bistables 72a à 72e. Sous la commande du processeur 80, les valeurs comptées par les compteurs 74a à 74e sont lues et les compteurs sont remis à zéro.

Les impulsions d'horloge du processeur 80 sont également comptées par un compteur 76a. Le déclenchement et l'arrêt du compteur 76a sont commandés aux passages par zéro successifs d'un compteur modulo 2 76b recevant les impulsions du circuit 70b. La valeur comptée par le compteur 76a, qui est représentative de la fréquence de la base de temps 36, et donc de la pression exercée sur la pointe de l'instrument, est lue sous la commande du processeur 80 et le compteur est remis à zéro.

Les valeurs comptées par les compteurs 74a à 74e représentent les temps de propagation des impulsions ultrasonores entre les émetteurs 12, 14 et les récepteurs 62a à 62e. Connaissant la vitesse de propagation des ultrasons, on peut en déduire la longueur du parcours accompli par les impulsions. Afin de tenir compte de l'influence de facteurs tels que la température et l'hygrométrie sur la vitesse de propagation des ultrasons, celle-ci est mesurée périodiquement. A cet effet, sous la commande du processeur 80, une impulsion de tension est produite par un circuit monostable 78, amplifiée par un amplificateur 78a et appliquée à un émetteur d'ondes ultrasonores 82 similaire aux émetteurs 12 et 14. L'impulsion est reçue par un récepteur 84 et est traitée de façon similaire aux impulsions reçues par les récepteurs 62a à 62e. Ainsi, l'impulsion reçue par le récepteur 84 est mise en forme au moyen d'un amplificateur 84a à asservissement automatique de gain, d'un détecteur de seuil 84b et d'un circuit monostable 84c. Une bascule bistable 86 est déclenchée par le front montant de l'impulsion du circuit monostable 78 et réenclenchée par le front montant de l'impulsion du circuit monostable 84c. Un compteur 88 recevant les impulsions d'horloge provenant du processeur 80 est démarré et arrêté sur les fronts montant et descendant de l'impulsion produite par la bascule bistable 86. Sous la commande du processeur 80, la valeur comptée par le compteur 88 est lue et le compteur est remis à zéro.

L'émetteur 82 et le récepteur 84 occupent des positions fixes prédéterminées, de sorte que la distance les séparant est connue. La valeur comptée par le compteur 88 permet donc de calculer la valeur réelle de la vitesse de propagation des ondes ultrasonores. Bien entendu, les emplacements de l'émetteur 82 et du récepteur 84 sont choisis pour ne pas influencer le fonctionnement des récepteurs 62a à 62e.

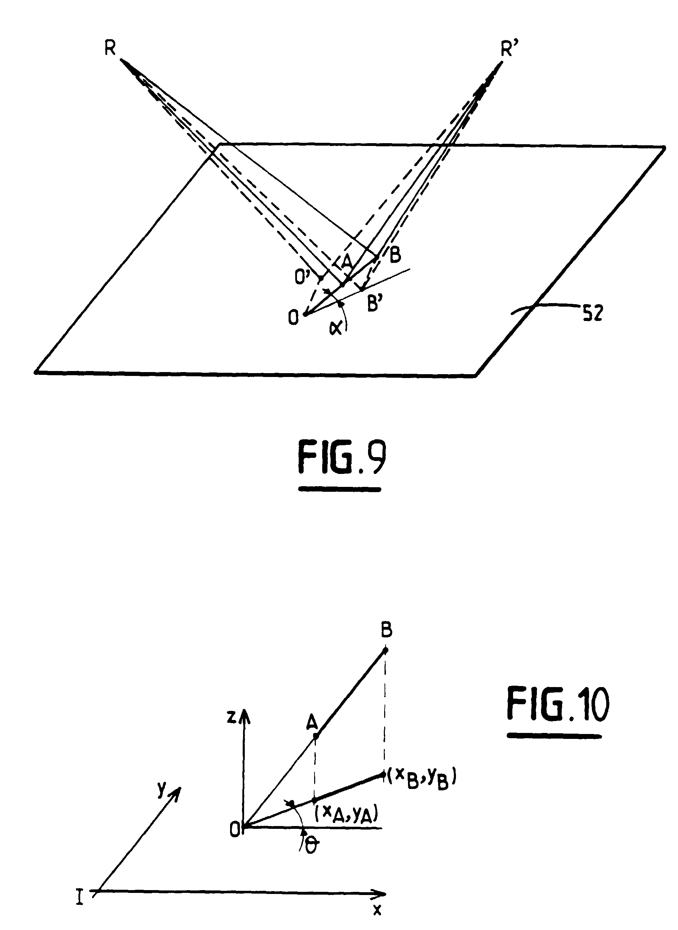

La figure 9 montre schématiquement l'emplacement des centres A et B des émetteurs ultrasonores 12, 14 et de l'extrémité O de la pointe 20 pour une position donnée de l'instrument 10 en appui sur le support 50. Sur la figure 9, les points R et R' représentent les centres de deux récepteurs ultrasonores, par exemple les récepteurs 62a et 62d. Le circuit décrit en référence à la figure 6 permet de déterminer les distances RA et RB, qui sont données par deux valeurs comptées successivement par le compteur 74a associé au récepteur 62a, ainsi que les distances R'A et R'B, qui sont données par deux valeurs comptées successivement par le compteur 74b associé au récepteur 62b.

Il peut être admis que la distance RB est sensiblement égale à la distance RB', et que la distance R'B est sensiblement égale à la distance R'B', B' étant la projection du point B sur le plan passant par les points R, R' et A, sensiblement parallèle au plan du support 50. De même, O' étant la projection du point O sur ce même plan, il peut être admis que les distances RO et RO' sont sensiblement égales, de même pour les distances R'O et R'O'.

La connaissance des distances RA et RB et des distances R'A et R'B permet alors, par un calcul simple de déterminer les coordonnées (x_{A}, y_{A}) et (x_{B}, y_{B}) des points dans un repère bidimensionnel lié au support 50, par exemple dans un repère orthonormé (Iₓ, I_{y}) dont les axes sont parallèles aux côtés de la surface rectangulaire 52 et le centre confondu avec un sommet de cette surface (figure 1).

Les émetteurs 12 et 14 sont montés sur le corps de l'instrument 10 de sorte que les points O, A et B soient sensiblement alignés. Le rapport r entre la distance OB (ou OB') et la distance AB (ou AB') étant connu, les coordonnées (x_{O}, y_{O}) du point O se déduisent aisément de celles des points A et B.

La détermination des coordonnées des points A et B est également utilisée pour fournir des informations relatives à l'orientation de l'instrument 10 par rapport au support, à savoir l'inclinaison de l'instrument par rapport au support et la position angulaire de l'instrument autour d'un axe ayant une direction prédéterminée par rapport au support.

Sur la figure 10, on a représenté en plan la projection du vecteur défini par les points A et B sur un plan parallèle à celui du support. L'amplitude de cette projection est fonction de l'inclinaison de l'instrument par rapport au support, cette amplitude est en effet fonction du cosinus de l'angle α que fait le vecteur AB par rapport au plan du support (figure 9). La mesure de l'amplitude de la projection du vecteur AB permet donc de déterminer l'angle α, et par là-même, l'inclinaison recherchée puisque l'angle β que fait le vecteur AB par rapport à l'axe longitudinal 24 de l'instrument est connu.

En outre, la position angulaire de l'instrument autour d'un axe est déterminée par la direction de la projection du vecteur AB. En prenant pour référence arbitraire l'axe Ix, la position angulaire θ de l'instrument est donc déterminée par la pente p de la droite contenant la projection AB (figure 10). L'axe de référence est non parallèle au vecteur AB ; il est par exemple perpendiculaire au support, tel que l'axe Oz (figure 10), l'instrument 10 n'étant normalement pas tenu dans une position telle que le vecteur AB est perpendiculaire au support.

La conversion de l'information d'inclinaison et de l'information de position angulaire de l'instrument en une information de largeur de trait dépend de l'outil géométrie de la pointe de l'outil. Pour certains outils, par exemple un pinceau, la largeur de trait sera uniquement donnée par la pression exercée sur la pointe.

Les valeurs d'épaisseur de trait pour différentes inclinaisons et positions angulaires et pour différentes pressions exercées sur la pointe sont déterminées pour différents types d'outils d'écriture et enregistrées dans des tables.

Lorsque la largeur de trait est donnée par l'inclinaison et la position angulaire de l'outil, par exemple lorsqu'il s'agit d'un feutre, les tables, pour les différents outils pouvant être simulés, sont sous forme de tableaux à deux entrées, l'une étant l'inclinaison et l'autre la position angulaire. Les valeurs de positions angulaires qui figurent dans les tables sont données par rapport à une référence qui correspond approximativement à la façon dont l'instrument 10 doit être normalement tenu par l'utilisateur pour que les émetteurs 12, 14 soient dirigés vers les récepteurs dans toute position de l'instrument sur la surface de visualisation 54.

Lorsque la largeur de trait est donnée par la pression exercée sur la pointe, les tables donnent directement la correspondance entre la pression et la largeur de trait.

Lorsque la largeur de trait est donnée par l'orientation (inclinaison et/ou position angulaire) et la pression exercée sur la pointe, les tables sont à deux entrées, l'une étant l'inclinaison ou la position angulaire et l'autre la pression, voire à trois entrées : inclinaison, position angulaire et pression.

La couleur du tracé est déterminé à partir d'une sélection de couleur de trait effectuée par l'utilisateur. Il est possible de choisir une même couleur pour un tracé complet, ou de choisir des couleurs différentes pour différentes parties d'un même tracé.

Une information de couleur de tracé est associée à l'information de position de la pointe de l'instrument et à l'information de largeur de trait pour cette position.

L'information de couleur de tracé dépend dans certains cas de la pression exercée sur la pointe de l'instrument. En effet, au moins avec «nains feutres, la densité de la couleur est d'autant plus forte que la pression exercée est plus élevée. Aussi, pour ces outils d'écriture, la correspondance entre la couleur de trait sélectionnée et la couleur simulée effectivement, c'est-à-dire l'information de couleur de tracé, est donnée par des tables en fonction de la pression exercée.

L'information de couleur de tracé dépend aussi d'une éventuelle superposition de plusieurs traits. Ainsi, lorsque plusieurs informations de couleur de trait sont associés à un même point du tracé, ce point est reproduit avec une couleur qui est la résultante de ces informations de couleur de trait. Si les couleurs de trait sont identiques, la résultante consiste dans cette même couleur avec un niveau de saturation plus élevé. Si les couleurs de trait sont différentes, la résultante consiste dans un mélange des couleurs de trait. La résultante est lue dans une table, parmi la palette de couleurs disponibles, afin de commander l'affichage du pixel correspondant avec la couleur résultante. L'information de couleur de tracé, c'est-à-dire la couleur résultante peut être élaborée au moment de la mémorisation des informations de tracé (position, largeur de trait, couleur), ou au moment de la reproduction du tracé. Dans ce dernier cas, plusieurs informations de couleur de trait peuvent être associées à une même information de position.

Le processeur 80 commande la détermination, pour chaque point échantillonné du tracé (c'est-à-dire pour chaque impulsion de la base de temps 36), des coordonnées (x_{A}; y_{A}), (x_{B}, y_{B}) avec validation de cette détermination par mesures redondantes, et la mémorisation de ces coordonnées dans une mémoire à accès aléatoire 96, en y associant une information indiquant le niveau de pression exercée sur la pointe de l'instrument. La mémoire 96 est accessible par un bus 98 auquel sont également reliés, outre le processeur 80, les compteurs 74a à 74e, 76a et 88.

L'information représentant le niveau de pression, en l'espèce le contenu du compteur 76a permet de détecter si une pression est exercée sur la pointe 10, c'est-à-dire si un tracé est en cours ou non.

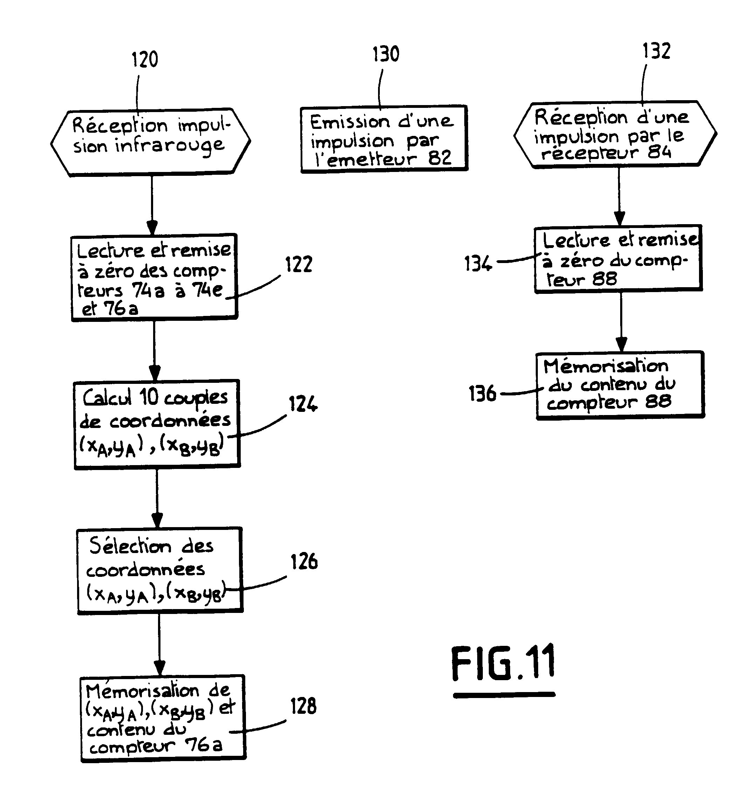

Les opérations effectuées sous la commande du processeur 80 pour déterminer les coordonnées (x_{A}, y_{A}), (x_{B}, y_{B}) et la pression exercée sur la pointe 20 sont les suivantes (figure 11) :

En réponse à la réception d'une impulsion infrarouge (phase 120), les contenus des compteurs 74a à 74e et 76a sont lus et les compteurs sont remis à zéro (phase 122).

Sur la base des contenus des compteurs 74a à 74e, les coordonnées (x_{A}, y_{A}), (x_{B}, y_{B}) sont calculées pour chaque couple de récepteurs, ce qui donne 10 résultats. Le calcul est effectué de façon bien connue par application de formules classiques de triangulation (phase 124).

Pour chaque coordonnée, on examine successivement les valeurs calculées, et l'on sélectionne la première valeur pour laquelle on trouve au moins une, et de préférence deux confirmations à l'intérieur d'une marge d'erreur prédéterminée (phase 126). Tout autre traitement statistique donnant la valeur la plus probable, à partir de la population calculée, pourrait être utilisé.

Les valeurs (x_{A}, y_{A}), (x_{B}, y_{B}) ainsi sélectionnées sont enregistrées dans la mémoire 96, en association avec la valeur lue dans le compteur 76a qui représente la fréquence des trains d'impulsions ultrasonores, c'est-à-dire la fréquence de la base de temps 36, donc la pression P exercée sur la pointe 20 (phase 128).

De façon périodique, le processeur 80 commande en outre l'émission d'une impulsion par l'émetteur 82 (phase 130). En réponse à la réception d'une impulsion par le récepteur 84 (phase 132), le contenu du compteur 88 est lu et le compteur est remis à zéro (phase 134). La valeur lue dans le compteur 88 est mémorisée (phase 136) pour fournir une référence de la vitesse des ultrasons dans l'air ambiant.

Les informations stockées dans la mémoire 96 sont accessibles à un système de contrôle et d'affichage organisé autour d'un processeur 102. Les tables donnant la relation entre, d'une part, la largeur de trait et, d'autre part. les inclinaisons et positions angulaires d'un outil d'écriture et/ou la pression exercée sur sa pointe, sont stockées en mémoire morte 104 pour différents types d'outils d'écriture. Il en est de même pour les tables donnant les relations entre pression exercée sur la pointe et niveau d'intensité de couleur, pour certains types d'outils d'écriture, et pour les tables donnant les relations entre couleur résultante de tracé et couleurs de trait sélectionnées en cas de superposition de traits.

Un bus 108 dessert le processeur 102, la mémoire morte 104, une mémoire à accès aléatoire 106, la mémoire à double accès 96 et le dispositif d'affichage 110.

Le processeur 102 commande l'exécution des calculs nécessaires à la détermination des coordonnées de la pointe de l'instrument et à l'évaluation des informations d'orientation de l'instrument. Pour chaque échantillonnage du tracé, le processeur commande la mémorisation dans la mémoire 106 des informations de position, de largeur de trait et de couleur de tracé déterminées et l'affichage du tracé correspondant sur le dispositif d'affichage 110.

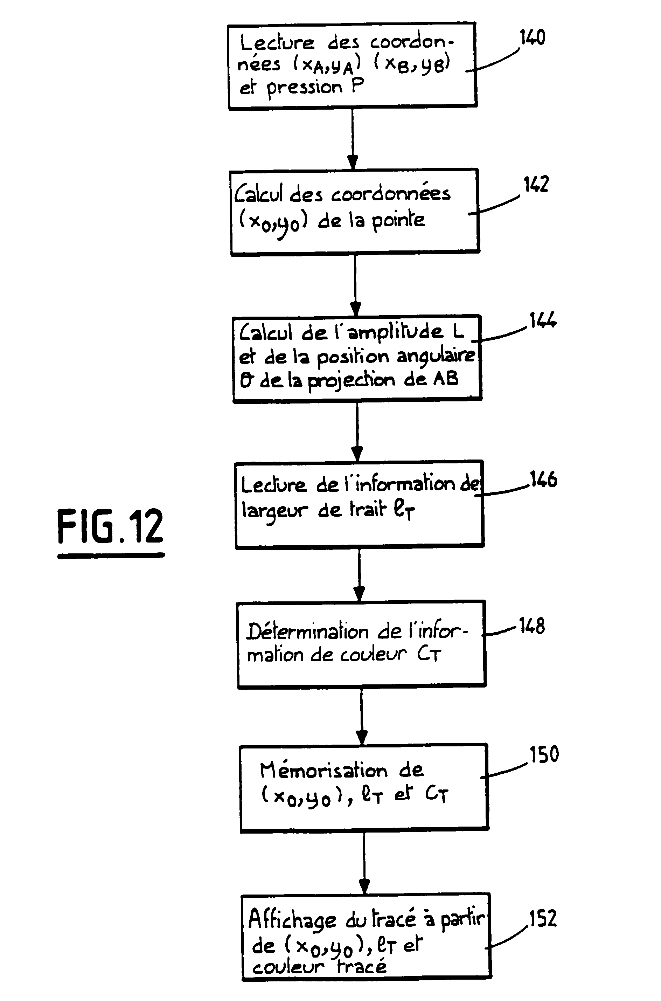

Ces opérations effectuées par le processeur 102 sont indiquées dans l'organigramme de la figure 12.

Périodiquement, un accès à la mémoire 96 est commandé pour lire les informations courantes représentatives des coordonnées (x_{A}, y_{A}), (x_{B}, y_{B}) et de la pression P (phase 140). L'accès en lecture dans la mémoire 96 par le processeur 102 est autorisé, sous la commande du processeur 80, en dehors des phases d'écriture dans cette mémoire.

A partir des valeurs lues (x_{A}, y_{A}, x_{B}, y_{B}), les coordonnées (x_{O}, y_{O}) de la pointe 20 sont calculées (phase 142).

Egalement à partir des valeurs lues (x_{A}, y_{A}), (x_{B}, y_{B}), l'amplitude L de la projection du vecteur AB est calculée, ainsi que l'angle θ correspondant à la pente de cette projection (voir figure 10) (phase 144).

En fonction du type d'outil sélectionné par l'utilisateur, une valeur de largeur de trait I_{T} est lue dans les tables de la mémoire 106 à partir des données P et/ou L et/ou θ (phase 146).

Une information de couleur C_{T} est déterminée qui, selon le type d'outil sélectionné par l'utilisateur est égale à la couleur de trait sélectionnée ou est lue dans une table de la mémoire 106 à partir de la donnée P (phase 148).

Les informations de coordonnées (x_{O}, y_{O}) calculées sont mémorisées en association avec l'information de largeur de trait I_{T} et l'information de couleur C_{T} correspondantes (phase 150).

Enfin, le dispositif 110 est commandé pour afficher sur l'écran 112 une image représentant les coordonnées (x_{O}, y_{O}), la largeur de trait I_{T} et la couleur de tracé (phase 152).

Lorsque plusieurs informations de couleur sont associées à une même information de position, la couleur de tracé pour cette position est lue dans la table de mélange de couleurs de la mémoire 106.

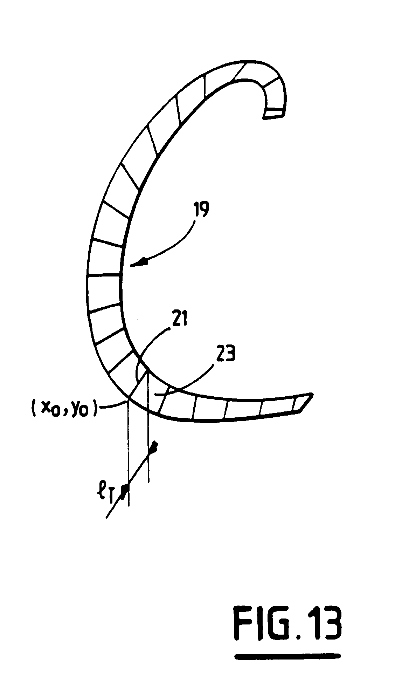

Comme montré sur la figure 13 qui est une représentation schématique de l'affichage d'un tracé réalisé avec le dispositif selon l'invention, le tracé 19 de largeur variable (pleins et déliés) est réalisé par l'affichage successif de traits de largeur I_{T} avec pour origine(x_{O}, y_{O}) repérés 21. Compte-tenu de la fréquence élevée de détermination des coordonnées des vecteurs (x_{A}, y_{A}), (x_{B}, y_{B}), ces traits sont très proches les uns des autres. De plus, les faibles espaces 23 éventuellement compris entre les projections sont comblés automatiquement lors de l'affichage avec la couleur sélectionnée par l'opérateur ou une couleur résultante. Bien évidemment, les différents traits 21 n'apparaissent pas à l'affichage, l'ensemble formant en définitive un tracé continu dont la largeur varie en fonction de l'orientation, l'inclinaison et la pression données à l'instrument par l'utilisateur.

Le processeur 102 gère en outre le dialogue avec l'utilisateur pour la mise en route du dispositif, le choix d'un type particulier d'outil d'écriture à simuler, le choix d'un calibre d'outil, le choix d'une couleur, la réalisation d'un tracé, l'effacement, la modification ou la sauvegarde de dessins, la copie ou le collage de dessins,...

Avantageusement, l'interface entre l'utilisateur et le processeur 102 est constitué uniquement par le support 50 et l'instrument 10.

Après mise en route du système, la détection du positionnement de la pointe de l'instrument 10 à l'extérieur de la surface de visualisation 54 du support 50, mais à l'intérieur de la surface utile 52 commande l'affichage d'un menu sur la surface de visualisation 54, par exemple sous forme d'icônes. Parmi les options du menu pouvant être sélectionnées figurent notamment les choix indiqués ci-dessus.

L'option du menu choisie est déterminée par la position de la pointe de l'instrument 10 en bordure de la surface de visualisation 54. La validation de la sélection est par exemple effectuée par appui de la pointe et détection de la pression ainsi exercée.

A titre d'exemple, le positionnement de la pointe de l'instrument 10 sur les côtés intérieurs de la surface utile 52, à la droite ou à la gauche de la surface de visualisation 54 (telle que montrée sur la figure 1), commande l'affichage à l'intérieur de cette surface 54 d'un menu offrant les options graphiques. La sélection et la validation d'une option est effectuée par détermination de la position de la pointe de l'instrument en regard de celle-ci, sur le côté extérieur de la surface 54, et par détection de l'appui de la pointe sur le support. Le positionnement de la pointe de l'instrument 10 sur le côté intérieur de la surface utile 52, au-dessous du bord inférieur de la surface de visualisation 54, commande l'affichage à l'intérieur de cette surface d'un menu de gestion de fichiers, la sélection et la validation étant effectuées comme décrit ci-avant. Enfin, le positionnement de la pointe de l'instrument sur le côté intérieur de la surface utile 52, au-dessus du bord supérieur de la surface de visualisation 54, commande l'exécution d'une phase d'étalonnage par émission d'impulsions ultrasonores par l'émetteur fixe 82 et mesure du temps de propagation jusqu'au récepteur fixe 84.

La sélection de programme est ainsi effectuée au moyen de l'instrument 10 et du support 50 de la même façon qu'avec un crayon optique et un écran de moniteur.

Le positionnement de la pointe de l'instrument à l'intérieur de la surface de visualisation 54 et la détection de la position de la pointe dans cette surface commandent l'effacement des menus et l'initialisation du programme d'acquisition et de traitement de tracé.

## Revendications

1. Procédé d'acquisition et de traitement de données graphiques représentatives d'un tracé effectué sur une surface (52) d'un support neutre (50) au moyen d'une pointe (20) d'un instrument (10), procédé comprenant :
- l'émission d'impulsions ultrasonores (E,F) au moyen d'au moins deux émetteurs d'ondes ultrasonores (12,14) portés par l'instrument, espacés l'un de l'autre dans une direction longitudinale de celui-ci, et sensiblement alignés avec la pointe (20) de l'instrument,
- la réception (G) des impulsions ultrasonores par plusieurs recepteurs d'ondes ultrasonores (62a-62e) occupant des positions déterminées par rapport au support (50) de sorte que des impulsions ultrasonores émises par les émetteurs de l'instrument situé à un point quelconque de la surface soient reçues par plus de deux récepteurs,
- la mesure (122) des temps de propagation des impulsions ultrasonores entre chacun des émetteurs et les récepteurs,
- l'évaluation (124,126), à partir des temps de propagation mesurés, des coordonnées (x_{A},y_{A}; x_{B},y_{B}) d'au moins un vecteur défini par les positions des deux émetteurs (12,14) portés par l'instrument,
- la détermination (142,144), à partir de l'évaluation des coordonnées dudit vecteur, de la position (xₒ,yₒ) de la pointe (20), l'instrument sur le support (50), et d'au moins l'une des deux informations d'orientation de l'instrument constituées par l'inclinaison (α-β) de la direction longitudinale (24) de l'instrument par rapport au support et la position angulaire (θ) de l'instrument autour d'un axe faisant un angle prédéterminé par rapport au support,
- la détection (36,40) de la pression exercée sur le support par la pointe de l'instrument,
- la transmission (A) d'une information représentative de la pression détectée, et
- la détermination, en fonction d'au moins l'une des informations d'orientation et de pression, d'une information de largeur de trait, afin d'associer à une information représentant la position de la pointe de l'instrument, une information représentant la largeur de trait pour cette position.

2. Procédé selon la revendication 1, caractérisé en ce que, pour l'évaluation des coordonnées du vecteur défini par les positions des deux émetteurs, on utilise un nombre redondant de mesures de temps de propagation, de sorte qu'une mesure erronnée ou aberrante peut être détectée et éliminée.

3. Procédé selon l'une quelconque des revendications 1 et 2, caractérisé en ce que lesdites informations d'orientation de l'instrument sont déterminées à partir de la mesure de l'amplitude et de la direction de la projection sur le support du vecteur défini par les positions des deux émetteurs.

4. Procédé selon l'une quelconque des revendications 1 à 3, caractérisé en ce que l'émission des impulsions ultrasonores et le démarrage de la mesure du temps de propagation de ces impulsions jusqu'aux récepteurs sont synchronisés par transmission d'impulsions infrarouges (D,H) depuis l'instrument, et l'information représentative de la pression exercée sur la pointe de l'instrument est transmise par modulation des impulsions infrarouges.

5. Procédé selon l'une quelconque des revendications 1 à 4, caractérisé en ce qu'il comprend une étape de sélection d'un type d'outil d'écriture simulé par l'instrument et la détermination de la largeur de trait est effectuée à partir d'informations préenregistrées donnant, pour différents outils d'écriture, une relation entre la largeur de trait tracé avec une pointe de l'outil d'écriture sur une surface et au moins une information parmi l'inclinaison d'une direction longitudinale de l'outil d'écriture par rapport à la surface, la position angulaire de l'outil d'écriture autour d'un axe faisant un angle prédéterminé par rapport à la surface et la pression exercée sur la pointe de l'outil d'écriture.

6. Procédé selon l'une quelconque des revendications 1 à 5, caractérisé en ce que les impulsions ultrasonores sont émises à une fréquence au moins égale à 50 Hz permettant la prise de coordonnées d'au moins 50 vecteurs par seconde.

7. Procédé selon l'une quelconque des revendications 1 à 6, caractérisé en ce qu'il comprend l'émission (130) et la réception (132), périodiquement, d'une impulsion ultrasonore au moyen d'un émetteur (82) et d'un récepteur (84) occupant des positions relatives fixes prédéterminées afin de fournir une valeur de référence de la vitesse de propagation des ondes ultrasonores dans le milieu ambiant.

8. Procédé selon l'une quelconque des revendications 1 à 7, caractérisé en ce'qu'il comprend la sélection d'une couleur de trait et la détermination d'une information de densité de couleur en fonction de l'information représentant la pression exercée sur la pointe de l'instrument, afin d'associer en outre à l'information représentant la position de la pointe de l'instrument, une information représentant la couleur du tracé pour cette position.

9. Procédé selon l'une quelconque des revendications 1 à 8, caractérisé en ce qu'il comprend la sélection d'une couleur de trait, des couleurs différentes pouvant être sélectionnées pour différentes parties du tracé, et l'association, à l'information représentant la position de la pointe de l'instrument, d'une information représentant la couleur du tracé pour cette position et consistant :
- soit dans la couleur de trait sélectionnée pour la partie du tracé sur laquelle se trouve la position de la pointe de l'instrument,
- soit dans une saturation de couleur sélectionnée lorsque la position de la pointe de l'instrument est à l'intersection de plusieurs parties de tracé pour lesquelles une même couleur a été sélectionnée,
- soit dans un mélange de couleurs sélectionnées lorsque la position de la pointe de l'instrument est à l'intersection de plusieurs parties de tracé pour lesquelles des couleurs différentes ont été sélectionnées.

10. Procédé selon l'une quelconque des revendications 1 à 9, caractérisé en ce que les informations de position et de largeur de trait sont utilisées pour commander l'affichage du tracé effectué avec la pointe de l'instrument et la rétroprojection sur le support du tracé affiché, de sorte que celui-ci apparaît en temps réel sous la pointe de l'instrument.

11. Procédé selon l'une quelconque des revendications 1 à 10, caractérisé en ce qu'il comprend l'affichage d'au moins un menu dans une zone de la surface du support et la sélection d'une option du menu affiché, en réponse à la détection de la position de la pointe de l'instrument en un emplacement correspondant à ladite option.

12. Procédé selon la revendication 11, caractérisé en ce que différents menus sont affichés dans une zone de visualisation de la surface du support et en ce que la sélection du menu désiré est effectuée en réponse à la détection de la pointe de l'instrument dans une région prédéterminée de la surface utile du support extérieure et adjacente à la zone de visualisation.

13. Procédé selon l'une quelconque des revendications 11 et 12, caractérisé en ce que le menu affiché permet de sélectionner notamment un type d'outil d'écriture dont l'utilisation est simulée, le calibre de cet outil et la couleur de trait.

14. Procédé selon l'une quelconque des revendications 11 à 13, caractérisé en ce que le menu affiché permet de sélectionner une fonction de gestion de dessin choisie notamment parmi les fonctions d'effacement, modification, sauvegarde, copie et collage.

15. Dispositif d'acquisition et de traitement de données graphiques représentatives d'un tracé effectué sur une surface d'un support (50) au moyen d'une pointe (20) d'un instrument (10), dispositif comportant :
- au moins deux émetteurs (12,14) d'ondes ultrasonores portés par l'instrument et espacés l'un de l'autre dans une direction longitudinale de l'instrument, et sensiblement alignés avec la pointe de l'instrument,
- un circuit (36, 42, 44) générateur d'impulsions de tension relié aux émetteurs pour engendrer l'émission de trains d'impulsions ultrasonores,
- plusieurs récepteurs (62a, 62b, 62c, 62d, 62e) d'ondes ultrasonores occupant des positions déterminées par rapport au support de sorte que des impulsions ultrasonores émises par les émetteurs de l'instrument situé à un point quelconque de la surface soient reçues par plus de deux récepteurs,
- des moyens (40) pour détecter la pression exercée sur la pointe (20) de l'instrument (10),
- des moyens de transmission d'une information de pression représentative de la pression détectée, et
- un circuit de traitement (60) relié aux récepteurs d'ondes ultrasonores et recevant l'information de pression, le circuit de traitement comprenant des moyens pour :
. la mesure des temps de propagation des impulsions ultrasonores entre chacun des émetteurs et les récepteurs,
. l'évaluation, à partir des temps de propagation mesurés, des coordonnées (x_{A},y_{A}; x_{B},y_{B}) d'au moins un vecteur défini par les positions des deux émetteurs portés par l'instrument
. la détermination, à partir de l'évaluation des coordonnées dudit vecteur, de la position (xₒ,yₒ) de la pointe de l'instrument sur le support et, d'au moins l'une des deux informations d'orientation de l'instrument constituées par l'inclinaison (α-β) de la direction longitudinale de l'instrument par rapport au support et la position angulaire (θ) de l'instrument autour d'un axe faisant un angle prédéterminé par rapport au support, et
. la détermination, en fonction d'au moins l'une des informations d'orientation et de pression, d'une information de largeur de trait, afin d'associer à une information représentant la position de la pointe de l'instrument, une information représentant la largeur de trait pour cette position.

16. Dispositif selon la revendication 15, caractérisé en ce que le circuit (36, 42, 44, 46) générateur d'impulsions de tension a une fréquence variable en fonction de la pression détectée.

17. Dispositif selon l'une quelconque des revendications 15 et 16, caractérisé en ce qu'il comprend des moyens (106) de mémorisation d'informations représentant, pour différents types d'outils d'écriture, une relation prédéterminée entre la largeur de trait et au moins l'une desdites informations d'orientation et de pression.

18. Dispositif selon l'une quelconque des revendications 15 à 17, caractérisé en ce qu'il comprend des moyens de sélection d'une couleur de trait et en ce que le circuit de traitement (60) comprend des moyens pour associer à l'information représentant la position de la pointe (20) de l'instrument (10) une information de couleur de tracé pour cette position.

19. Dispositif selon la revendication 18, caractérisé en ce que le circuit de traitement comprend des moyens (106) pour associer à l'information de position de la pointe (20) de l'instrument (10) une information de couleur de tracé consistant :
- soit dans la couleur de trait sélectionnée pour la partie du tracé sur laquelle se trouve la position de la pointe de l'instrument,
- soit dans une saturation de couleur sélectionnée lorsque la position de la pointe de l'instrument est à l'intersection de plusieurs parties de tracé pour lesquelles une même couleur a été sélectionnée,
- soit dans un mélange de couleurs sélectionnées lorsque la position de la pointe de l'instrument est à l'intersection de plusieurs parties de tracé pour lesquelles des couleurs différentes ont été sélectionnées.

20. Dispositif selon l'une quelconque des revendications 18 et 19, caractérisé en ce qu'il comprend des moyens (106) pour mémoriser, pour au moins certains types d'outils d'écriture simulés, la relation entre la couleur de trait sélectionnée et la couleur de tracé correspondant à la couleur de trait sélectionnée avec une densité de couleur fonction de la pression exercée sur la pointe de l'outil.

21. Dispositif selon l'une quelconque des revendication 18 à 20, caractérisé en ce qu'il comprend des moyens (110) d'affichage en temps réel d'une image du tracé reproduisant les informations de position, de largeur de trait et de couleur de tracé.

22. Dispositif selon la revendication 21, caractérisé en ce que les moyens d'affichage comportent un dispositif (118) de rétroprojection sur le support (50) réalisé en matériau translucide de sorte que l'image du tracé apparaît en temps réel sous la pointe (20) de l'instrument (10).

23. Dispositif selon l'une quelconque des revendications 15 à 22, caractérisé en ce que les récepteurs (62a, 62b, 62c, 62d, 62e) sont disposés sur une même ligne le long d'un côté de la surface utile

24. Dispositif selon l'une quelconque des revendications 15 à 23, caractérisé en ce que les émetteurs (12, 14) et récepteurs (62a, 62b, 62c, 62d, 62e) d'ondes ultrasonores sont constitués par des transducteurs directionnels.

25. Dispositif selon l'une quelconque des revendications 15 à 24, caractérisé en ce qu'il comprend au moins un émetteur (16, 18) d'ondes infrarouges porté par l'instrument (10), des moyens (44) pour appliquer à l'émetteur d'ondes infrarouges des impulsions en synchronisme avec l'application d'impulsions aux émetteurs (12, 14) d'ondes ultrasonores, et au moins un récepteur (70) d'ondes infrarouges porté par le support.

26. Dispositif selon la revendication 25, caractérisé en ce qu'il comprend deux émetteurs (16, 18) d'ondes infrarouges branchés en parallèle et fixés en deux emplacements opposés de l'instrument.

27. Dispositif selon l'une quelconque des revendications 15 à 26, caractérisé en ce qu'il comprend au moins un émetteur et un récepteur d'ondes ultrasonores supplémentaires (82, 84) occupant des positions relatives fixes prédéterminées et le circuit de traitement (60) comprend des moyens pour mesurer le temps de propagation d'ondes ultrasonores entre l'émetteur et le récepteur supplémentaires de façon à élaborer une information représentative de la vitesse de propagation des ondes ultrasonores.

## Patentansprüche

1. Verfahren zum Erfassen und zum Behandeln graphischer Daten, die repräsentativ sind für einen auf einer Oberfläche (52) einer neutralen Unterlage (50) mit der Spitze (20) eines Geräts (10) ausgeführten Linienzug, umfassend:
- Aussenden von Ultraschallimpulsen (E, F) mit Hilfe mindestens zweier Ultraschallwellensender (12, 14), die von dem Gerät getragen werden, die in dessen Längsrichtung gegeneinander versetzt sind, und die im wesentlichen mit der Spitze (20) des Geräts ausgerichtet sind,
- Empfangen (G) von Ultraschallimpulsen mit Hilfe mehrerer Ultraschallwellenempfänger (62a-62e), die bestimmte Positionen in bezug auf die Unterlage (50) einnehmen, derart, daß die Ultraschallimpulse, die von den Sendern des an irgendeinem Punkt der Oberfläche befindlichen Geräts von mehr als zwei Empfängern empfangen werden,
- Messen (122) der Laufzeiten der Ultraschallimpulse zwischen jedem der Sender und den Empfängern,
- Berechnen (124, 126) der Koordinaten (X_{A}, Y_{A}; X_{B}, Y_{B}) mindestens eines durch die Positionen der zwei von dem Gerät getragenen Sender (12, 14) definierten Vektors auf der Basis der gemessenen Laufzeiten,
- ausgehend von der Berechnung der Koordinaten des Vektors, Bestimmen (142, 144) der Stelle (X₀, Y₀) der Spitze (20) des Geräts auf der Unterlage (50) sowie zumindest einer der beiden Orientierungsinformationen des Geräts, bestehend aus der Neigung (α-β) der Längsrichtung (24) des Geräts bezüglich der Unterlage und der Winkelstellung (θ) des Geräts bezüglich einer Achse, die bezüglich der Unterlage einen vorbestimmten Winkel bildet,
- Detektieren (36, 40) des mit der Spitze des Geräts auf die Unterlage ausgeübten Drucks,
- übertragen (A) einer für den detektierten Druck repräsentativen Information, und
- als Funktion zumindest einer der Orientierungsinformationen und des Drucks, Bestimmen einer Information über die Breite des Linienzugs, um einer die Stellung der Spitze des Geräts repräsentierenden Information eine Information über die Breite des Linienzugs für diese Position hinzuzufügen.

2. Verfahren nach Anspruch 1, dadurch gekennzeichnet, daß zum Berechnen der Koordinaten des definierten Vektors anhand der Positionen von zwei Sendern von einer redundanten Anzahl von Messungen der Laufzeit derart Gebrauch gemacht wird, daß eine fehlerhafte Messung oder ein Meßwert-Ausreißer nachgewiesen und eliminiert werden kann.

3. Verfahren nach Anspruch 1 oder 2, dadurch gekennzeichnet, daß die Orientierungsinformationen des Geräts bestimmt werden anhand der Messung des Betrags und der Richtung der Projektion des durch die Positionen der zwei Sender definierten Vektors auf die Unterlage.

4. Verfahren nach einem der Ansprüche 1 bis 3, dadurch gekennzeichnet, daß das Aussenden von Ultraschallimpulsen und der Beginn der Messung der Laufzeit dieser Impulse von dem Gerät bis zu den Empfängern durch die Übertragung von Infrarotimpulsen (D, H) synchronisiert werden, und die für den auf die Spitze des Geräts ausgeübten Druck repräsentative Information durch Modulation der Infrarotimpulse übertragen wird.

5. Verfahren nach einem der Ansprüche 1 bis 4, dadurch gekennzeichnet, daß es einen Schritt der Auswahl eines von dem Gerät simulierten Schreibwerkzeug-Typs umfaßt, und die Bestimmung der Breite des Linienzugs vorgenommen wird anhand von vorab gespeicherten Informationen, die für verschiedene Schreibwerkzeuge eine Relation angeben zwischen der Breite eines mit einer Spitze des Schreibwerkzeugs auf einer Fläche gezogenen Linienzugs und mindestens einer Information aus der Neigung einer Längsrichtung des Schreibwerkzeugs in bezug auf die Fläche, der Winkelstellung des Schreibwerkzeugs bezüglich einer Achse, die bezüglich der Fläche einen vorbestimmten Winkel einnimmt, und dem auf die Spitze des Schreibwerkzeugs ausgeübten Druck.

6. Verfahren nach einem der Ansprüche 1 bis 5, dadurch gekennzeichnet, daß die Ultraschallimpulse mit einer Frequenz abgestrahlt werden, die mindestens 50 Hz beträgt, damit pro Sekunde die Aufnahme von Koordinaten von mindestens 50 Vektoren möglich ist.

7. Verfahren nach einem der Ansprüche 1 bis 6, dadurch gekennzeichnet, daß es das periodische Senden (130) und Empfangen (132) eines Ultraschallimpulses mit Hilfe eines Senders (82) und eines Empfängers (84) umfaßt, welche vorbestimmte, relativ fixe Positionen belegen, um einen Referenzwert bezüglich der Ausbreitungsgeschwindigkeit der Ultraschallwellen in der Umgebung zu liefern.

8. Verfahren nach einem der Ansprüche 1 bis 7, dadurch gekennzeichnet, daß es die Auswahl einer Farbe des Strichs und die Festlegung einer Dichteinformation der Farbe als Funktion der Information über den auf die Spitze des Geräts ausgeübten Druck umfaßt, um der Information über die Position der Spitze des Geräts außerdem eine Information über die Farbe des Linienzugs für diese Position hinzuzufügen.

9. Verfahren nach einem der Ansprüche 1 bis 8, dadurch gekennzeichnet, daß es die Auswahl einer Strichfarbe, wobei unterschiedliche Farben für unterschiedliche Teile des Linienzugs ausgewählt werden können, und die Zuordnung einer Information über die Farbe des Linienzugs für eine Position zu der diese Position der Spitze des Geräts repräsentierenden Information beinhaltet, wobei die hinzugefügte Information besteht aus:
- entweder der Strichfarbe, die für den Teil des Linienzugs ausgewählt wurde, auf dem sich die Position der Spitze des Geräts befindet,
- oder einer Sättigung der ausgewählten Farbe, wenn die Position der Spitze des Geräts sich am Schnittpunkt mehrerer Teile des Linienzugs befindet, für die ein und dieselbe Farbe ausgewählt wurde,
- oder einer Mischung von ausgewählten Farben, wenn die Position der Spitze des Geräts sich an dem Schnittpunkt mehrerer Teile des Linienzugs befindet, für die verschiedene Farben ausgewählt wurden.

10. Verfahren nach einem der Ansprüche 1 bis 9, dadurch gekennzeichnet, daß die Informationen über die Lage und die Breite des Strichs dazu verwendet werden, die Anzeige des mit der Spitze des Geräts ausgeführten Linienzugs und die Rückprojektion auf die Unterlage des angezeigten Linienzugs anzuweisen, derart, daß letzterer im Echtzeitbetrieb unterhalb der Gerätespitze erscheint.

11. Verfahren nach einem der Ansprüche 1 bis 10, dadurch gekennzeichnet, daß es die Sichtbarmachung mindestens eines Menüs in einer Zone der Oberfläche der Unterlage ebenso beinhaltet wie die Auswahl einer Option des dargestellten Menüs ansprechend auf das Detektieren der Position der Gerätespitze an einer dieser Option entsprechenden Stelle.

12. Verfahren nach Anspruch 11, dadurch gekennzeichnet, daß in einer Schauzone der Oberfläche der Unterlage verschiedene Menüs angezeigt werden, und daß die Auswahl des gewünschten Menüs ansprechend darauf erfolgt, daß die Spitze des Geräts in einer vorbestimmten Zone der Arbeitsfläche der Unterlage außerhalb und benachbart zu der Schauzone nachgewiesen wird.

13. Verfahren nach Anspruch 11 oder 12, dadurch gekennzeichnet, daß das angezeigte Menü insbesondere die Auswahl eines Schreibwerkzeug-Typs für den simulierten Einsatz, der Strichstärke dieses Werkzeugs und der Strichfarbe ermöglicht.

14. Verfahren nach einem der Ansprüche 1 bis 13, dadurch gekennzeichnet, daß das angezeigte Menü die Auswahl einer Zeichnungsbehandlungsfunktion gestattet, die insbesondere ausgewählt wird unter den Funktionen Löschen, Modifizieren, Sichern, Kopieren und Collage.

15. Vorrichtung zum Erfassen und Behandeln graphischer Daten, die repräsentativ sind für einen auf einer Oberfläche einer Unterlage (50) mit Hilfe einer Spitze (20) eines Geräts (10) ausgeführten Linienzug, umfassend:
- mindestens zwei Sender (12, 14) für Ultraschallwellen, die von dem Gerät getragen werden und voneinander in Längsrichtung des Geräts beabstandet sind sowie mit der Spitze des Geräts im wesentlichen ausgerichtet sind,
- eine Spannungsimpulsgeberschaltung (36, 42, 44), die mit den Sendern verbunden ist, um die Emission von Ultraschallimpulszügen zu veranlassen,
- mehrere Ultraschallwellenempfänger (62a, 62b, 62c, 62d, 62e), die bestimmte Positionen bezüglich der Unterlage belegen, derart, daß die von den Sendern des an irgendeinem Punkt auf der Oberfläche befindlichen Geräts abgestrahlten Ultraschallimpulse von mehr als zwei Empfängern empfangen werden,
- Mittel (40) zum Detektieren des auf die Spitze (20) des Geräts (10) ausgeübten Drucks,
- Mittel zum Übertragen einer für den detektierten Druck repräsentativen Information, und
- eine Behandlungsschaltung (60), die mit den Ultraschallwellenempfängern verbunden ist und die Druckinformation empfängt, wobei die Behandlungsschaltung Mittel aufweist für:
- die Messung der Laufzeit der Ultraschallimpulse zwischen jedem der Sender und den Empfängern,
- die Berechnung von Koordinaten (X_{A}, Y_{A}; X_{B}, Y_{B}) mindestens eines durch die Positionen der beiden von dem Gerät getragenen Sender definierten Vektors mit Hilfe der gemessenen Laufzeit,
- ausgehend von der Berechnung der Koordinaten des Vektors, die Bestimmung der Position (X₀, Y₀) der Spitze des Instruments auf der Unterlage und mindestens einer der zwei Orientierungsinformationen des Geräts, die gebildet werden durch die Neigung (α-β) der Längsrichtung des Geräts bezüglich der Unterlage und die Winkelstellung (θ) des Geräts bezüglich einer Achse, die einen vorbestimmten Winkel bezüglich der Unterlage bildet, und
- als Funktion zumindest einer der Orientierungsinformationen und der Druckinformation, die Bestimmung einer Information über die Breite des Strichs, um einer Information über die Position der Spitze des Geräts eine Information über die Strichgröße für diese Position hinzuzufügen.

16. Vorrichtung nach Anspruch 15, dadurch gekennzeichnet, daß die Spannungsimpulsgeberschaltung (36, 42, 44, 46) eine als Funktion des ermittelten Drucks veränderliche Frequenz aufweist.

17. Vorrichtung nach Anspruch 15 oder 16, dadurch gekennzeichnet, daß sie Mittel (106) zum Speichern von Informationen aufweist, die für verschiedene Schreibwerkzeug-Typen eine vorbestimmte Relation zwischen der Strichbreite und mindestens einer der Orientierungsinformationen und der Druckinformation darstellen.

18. Vorrichtung nach einem der Ansprüche 15 bis 17, dadurch gekennzeichnet, daß sie Mittel zur Auswahl einer Strichfarbe aufweist, und daß die Behandlungsschaltung (60) Mittel aufweist, um der die Position der Spitze (20) des Geräts (10) repräsentierenden Information eine Information über die Farbe der Linie für diese Position hinzuzufügen.

19. Vorrichtung nach Anspruch 18, dadurch gekennzeichnet, daß die Behandlungsschaltung Mittel (106) aufweist, um der Information über die Position der Spitze (20) des Geräts (10) eine Information über die Farbe des Linienzugs hinzuzufügen, welche besteht aus:
- entweder der Strichfarbe, die für den Teil des Linienzugs ausgewählt wurde, auf dem sich die Position der Spitze des Geräts befindet,
- oder einer Sättigung der ausgewählten Farbe, wenn die Position der Spitze des Geräts sich am Schnittpunkt mehrerer Teile des Linienzugs befindet, für die ein und dieselbe Farbe ausgewählt wurde,
- oder einer Mischung von ausgewählten Farben, wenn die Position der Spitze des Geräts sich an dem Schnittpunkt mehrerer Teile des Linienzugs befindet, für die verschiedene Farben ausgewählt wurden.

20. Vorrichtung nach Anspruch 18 oder 19, dadurch gekennzeichnet, daß sie Mittel (106) aufweist, um für zumindest gewisse simulierte Schreibwerkzeug-Typen die Relation zwischen der ausgewählten Farbe des Strichs und der Farbe des Linienzugs entsprechend der ausgewählten Farbe des Strichs mit einer Farbdichte als Funktion des auf die Spitze des Werkzeugs ausgeübten Drucks zu speichern.

21. Vorrichtung nach einem der Ansprüche 18 bis 20, dadurch gekennzeichnet, daß sie Mittel (110) aufweist zur Echtzeit-Anzeige eines Bildes des Linienzugs, indem die Informationen über Position, Strichbreite und Farbe des Linienzugs reproduziert werden.

22. Vorrichtung nach Anspruch 21, dadurch gekennzeichnet, daß die Anzeigemittel eine Vorrichtung (118) zur Rückprojektion auf die Unterlage (50) aufweisen, welche aus durchscheinendem Material hergestellt ist, so daß das Abbild des Linienzugs in Echtzeit unterhalb der Spitze (20) des Geräts (10) erscheint.

23. Vorrichtung nach einem der Ansprüche 15 bis 22, dadurch gekennzeichnet, daß die Empfänger (62a, 62b, 62c, 62d, 62e) auf einer gemeinsamen Linie entlang einer Seite der Arbeitsfläche angeordnet sind.

24. Vorrichtung nach einem der Ansprüche 15 bis 23, dadurch gekennzeichnet, daß die Sender (12, 14) und Empfänger (62a, 62b, 62c, 62d, 62e) der Ultraschallwellen durch Richtungswandler gebildet werden.

25. Vorrichtung nach einem der Ansprüche 15 bis 24, dadurch gekennzeichnet, daß sie aufweist:
mindestens einen Infrarotstrahlensensor (16, 18), der von dem Gerät (10) getragen wird, Mittel (44) zum Anlegen von Infrarotstrahlimpulsen an den Sender synchron mit dem Anlegen von Impulsen an die Ultraschallwellensender (12, 14), und mindestens einen Empfänger (70) für Infrarotstrahlen, der von der Unterlage aufgenommen wird.

26. Vorrichtung nach Anspruch 25, dadurch gekennzeichnet, daß sie zwei Infrarotstrahlensender (16, 18) aufweist, die parallel geschaltet sind und an zwei einander gegenüberliegenden Stellen des Geräts angeordnet sind.

27. Vorrichtung nach einem der Ansprüche 15 bis 26, dadurch gekennzeichnet, daß sie mindestens einen zusätzlichen Sender und Empfänger für Ultraschallstrahlen (82, 84) aufweist, die sich an vorbestimmten fixen Relativ-Positionen befinden, und daß die Behandlungsschaltung (60) Mittel aufweist, um die Laufzeit von Ultraschallwellen zwischen dem Zusatz-Sender und -Empfänger zu messen und eine Information abzuleiten, die repräsentativ ist für die Ausbreitungsgeschwindigkeit der Ultraschallwellen.

## Claims

1. Method of capturing and processing graphical data representative of a trace made on a surface (52) of a neutral support (50) by means of a tip (20) of an instrument (10), the method comprising:
- the emission of ultrasound pulses (E, F) by means of at least two ultrasound wave emitters (12, 14) carried by the instrument and spaced apart in a longitudinal direction of the latter, and substantially aligned with the tip (20) of the instrument,
- the reception (G) of the ultrasound pulses by several ultrasound wave receivers (62a-62e) occupying positions determined with respect to the support (50) in such a way that ultrasound pulses emitted by the emitters of the instrument situated at any point on the surface are received by more than two receivers,
- the measurement (122) of the propagation times of the ultrasound pulses between each of the emitters and receivers,
- the evaluation (124, 126), from the measured propagation times, of the coordinates (x_{A}, y_{A}; x_{B}, y_{B}) of at least one vector defined by the positions of the two emitters (12, 14) carried by the instrument,
- the determination (142, 144), from the evaluation of the coordinates of said vector, of the position (x_{O}, y_{O}) of the tip (20) of the instrument on the support (50), and of at least one of the two instrument orientation data consisting of the inclination (α-β) of the longitudinal direction (24) of the instrument with respect to the support and the angular position (θ) of the instrument about an axis making a predetermined angle with respect to the support,
- the detection (36, 40) of the pressure exerted on the support by the tip of the instrument,
- the transmission (A) of a data item representative of the detected pressure and
- the determination, as a function of at least one of the orientation and pressure data, of a stroke width data item, so as to associate with a data item representing the position of the tip of the instrument, a data item representing the stroke width for this position.

2. Method according to Claim 1, characterized in that, for the evaluation of the coordinates of the vector defined by the positions of the two emitters, use is made of a redundant number of propagation time measurements, so that an erroneous or anomalous measurement can be detected and discarded.

3. Method according to either one of Claims 1 and 2, characterized in that said orientation data of the instrument are determined from the measurement of the amplitude and direction of the projection onto the support of the vector defined by the positions of the two emitters.

4. Method according to any one of Claims 1 to 3, characterized in that the emission of the ultrasound pulses and the commencement of the measurement of the propagation time of these pulses up to the receivers are synchronized through transmission of infrared pulses (D, H) from the instrument, and the data item representative of the pressure exerted on the tip of the instrument is transmitted by modulation of the infrared pulses.

5. Method according to any one of Claims 1 to 4, characterized in that it comprises a step of selection of a type of writing implement simulated by the instrument and determination of the stroke width is performed on the basis of prerecorded data giving, for various writing implements, a relation between the width of stroke traced with a tip of the writing implement on a surface and at least one data item from among the inclination of a longitudinal direction of the writing implement with respect to the surface, the angular position of the writing implement about an axis making a predetermined angle with respect to the surface and the pressure exerted on the tip of the writing implement.

6. Method according to any one of Claims 1 to 5, characterized in that the ultrasound pulses are emitted at a frequency at least equal to 50 Hz allowing acquisition of the coordinates of at least 50 vectors per second.

7. Method according to any one of Claims 1 to 6, characterized in that it comprises the emission (130) and reception (132), periodically, of an ultrasound pulse by means of an emitter (82) and a receiver (84) occupying predetermined fixed relative positions so as to provide a reference value of the speed of propagation of the ultrasound waves in the ambient environment.

8. Method according to any one of Claims 1 to 7, characterized in that it comprises the selection of a stroke colour and the determination of a colour density data item on the basis of the data item representing the pressure exerted on the tip of the instrument, so as additionally to associate with the data item representing the position of tip of the instrument, a data item representing the colour of the trace for this position.

9. Method according to any one of Claims 1 to 8, characterized in that it comprises the selection of a stroke colour, different colours being selectable for various portions of the trace, and the association, with the data item representing the position of the tip of the instrument, of a data item representing the colour of the trace for this position and consisting:
- either in the stroke colour selected for that portion of the trace on which the position of the tip of the instrument lies,
- or in a colour saturation selected when the position of the tip of the instrument is at the intersection of several trace portions for which the same colour has been selected,
- or in a mixture of colours selected when the position of the tip of the instrument is at the intersection of several trace portions for which different colours have been selected.

10. Method according to any one of Claims 1 to 9, characterized in that the position and stroke width data are used to control the displaying of the trace made with the tip of the instrument and the back-projection onto the support of the displayed trace, so that the latter appears in real time under the tip of the instrument.

11. Method according to any one of Claims 1 to 10, characterized in that it comprises the displaying of at least one menu in a zone of the surface of the support and the selecting of an option from the displayed menu, in response to the detection of the position of the tip of the instrument at a location corresponding to said option.

12. Method according to Claim 11, characterized in that various menus are displayed in a viewing zone of the surface of the support and in that the selecting of the desired menu is performed in response to the detecting of the tip of the instrument in a predetermined region of the working area of the support, outside and adjacent to the viewing zone.

13. Method according to either one of Claims 11 and 12, characterized in that the displayed menu makes it possible to select in particular a type of writing implement whose use is simulated, the gauge of this implement and the stroke colour.

14. Method according to any one of Claims 11 to 13, characterized in that the displayed menu makes it possible to select a drawing management function chosen in particular from the erase, modify, save, copy and paste functions.

15. Device for capturing and processing graphical data representative of a trace made on a surface of a support (50) by means of a tip (20) of an instrument (10), the device including:
- at least two ultrasound wave emitters (12, 14) carried by the instrument and spaced apart in a longitudinal direction of the instrument, and substantially aligned with the tip of the instrument,
- a voltage pulse generating circuit (36, 42, 44) connected to the emitters in order to effect the emission of ultrasound pulse trains,
- several ultrasound wave receivers (62a, 62b, 62c, 62d, 62e) occupying positions determined with respect to the support in such a way that ultrasound pulses emitted by the emitters of the instrument situated at any point on the surface are received by more than two receivers,
- means (40) for detecting the pressure exerted on the tip (20) of the instrument (10),
- means of transmitting a pressure data item representative of the detected pressure, and
- a processing circuit (60) connected to the ultrasound wave receivers and receiving the pressure data item, the processing circuit comprising means for
. measuring the propagation times of the ultrasound pulses between each of the emitters and receivers,
. evaluating, from the measured propagation times, the coordinates (x_{A}, y_{A}; x_{B}, Y_{B}) of at least one vector defined by the positions of the two emitters carried by the instrument,
. determining, from the evaluation of the coordinates of said vector, the position (x_{O}, y_{O}) of the tip of the instrument on the support, and at least one of the two instrument orientation data consisting of the inclination (α-β) of the longitudinal direction of the instrument with respect to the support and the angular position (θ) of the instrument about an axis making a predetermined angle with respect to the support, and
. determining, as a function of at least one of the orientation and pressure data, a stroke width data item, so as to associate with a data item representing the position of the tip of the instrument, a data item representing the stroke width for this position.

16. Device according to Claim 15, characterized in that the voltage pulse generating circuit (36, 42, 44, 46) has a frequency which varies as a function of the detected pressure.

17. Device according to either one of Claims 15 and 16, characterized in that it comprises means (106) for storing data representing, for various types of writing implements, a predetermined relation between the stroke width and at least one of said orientation and pressure data.

18. Device according to any one of Claims 15 to 17, characterized in that it comprises means of selecting a stroke colour and in that the processing circuit (60) comprises means for associating with the data item representing the position of the tip (20) of the instrument (10) a trace colour data item for this position.

19. Device according to Claim 18, characterized in that the processing circuit comprises means (106) for associating with the position data item for the tip (20) of the instrument (10) a trace colour data item consisting:
- either in the stroke colour selected for that portion of the trace on which the position of the tip of the instrument lies,
- or in a colour saturation selected when the position of the tip of the instrument is at the intersection of several trace portions for which the same colour has been selected,
- or in a mixture of colours selected when the position of the tip of the instrument is at the intersection of several trace portions for which different colours have been selected.

20. Device according to either one of Claims 18 and 19, characterized in that it comprises means (106) for storing, for at least certain types of simulated writing implements, the relation between the selected colour of stroke and the trace colour corresponding to the selected colour of stroke together with a colour density depending on the pressure exerted on the tip of the implement.

21. Device according to any one of Claims 18 to 20, characterized in that it comprises means (110) for displaying in real time an image of the trace reproducing the position, stroke width and trace colour data.

22. Device according to Claim 21, characterized in that the display means include a device (118) for back-projection onto the support (50) made from a translucent material so that the image of the trace appears in real time under the tip (20) of the instrument (10).

23. Device according to any one of Claims 15 to 22, characterized in that the receivers (62a, 62b, 62c, 62d, 62e) are arranged on one and the same line along one side of the working area.

24. Device according to any one of Claims 15 to 23, characterized in that the ultrasound wave emitters (12, 14) and receivers (62a, 62b, 62c, 62d, 62e) are constituted by directional transducers.

25. Device according to any one of Claims 15 to 24, characterized in that it comprises at least one infrared wave emitter (16, 18) carried by the instrument (10), means (44) for applying pulses to the infrared wave emitter in synchronism with the application of pulses to the ultrasound wave emitters (12, 14), and at least one infrared wave receiver (70) carried by the support.

26. Device according to Claim 25, characterized in that it comprises two infrared wave emitters (16, 18) linked in parallel and fixed at two opposite locations of the instrument.

27. Device according to any one of Claims 15 to 26, characterized in that it comprises at least one additional ultrasound wave emitter and receiver (82, 84) occupying predetermined fixed relative positions and the processing circuit (60) comprises means for measuring the time of propagation of ultrasound waves between the additional emitter and receiver so as to compile a data item representative of the speed of propagation of the ultrasound waves.
